# EUROPEAN PATENT APPLICATION

(11) **EP 3 576 042 A1**
(43) Date of publication of application: **04.12.2019**
(21) Application number: 19161867.7
(22) Date of filing: 11.03.2019
(51) Int. Cl.: G06Q 50/06

(54) **DATA PREDICTION SYSTEM, DATA PREDICTION METHOD, AND DATA PREDICTION APPARATUS**

(30) Priority: 01.06.2018 JP 2018106301
(71) Applicant: Hitachi, Ltd., Tokyo 100-8280 (JP)
(72) Inventor: UTSUMI, Masato, Chiyoda-ku, Tokyo 100-8280 (JP); WATANABE, Tohru, Chiyoda-ku, Tokyo 100-8280 (JP); SHIGEMORI, Ikuo, Chiyoda-ku, Tokyo 100-8280 (JP)
(74) Representative: Mewburn Ellis LLP

(57) **Abstract**

According to one embodiment, a data prediction system includes: a factor separating unit configured to separate a factor constituting a transition of a value of a prediction target from the value; a factor predicting unit configured to calculate factor prediction data that is prediction data of each factor based on the factor separated by the factor separating unit and a parameter related to the prediction target; and a prediction calculating unit configured to calculate prediction data of the prediction target based on the factor prediction data calculated by the factor predicting unit.

## Description

### BACKGROUND OF THE INVENTION

### 1. Field of the Invention

The present invention relates to a data prediction system, a data prediction method, and a data prediction apparatus, and is suitable for application to, for example, a data prediction system, a data prediction method, and a data prediction apparatus, which predict future demands.

### 2. Description of Related Art

In energy business fields such as electric power business, and gas business, communication business fields, and transportation business fields such as taxi transportation business, future demands are predicted so as to perform operation of facilities, distribution of resources and the like according to customer's demand.

For example, in fields of electric power business, there is a physical restriction that a generation amount and demands of electricity need to be always matched. It is necessary to accurately predict electric power demand because necessary and sufficient generators need to be put on standby in advance.

In this regard, a method of using a prediction result before a prediction target time having a correlation with a value of the prediction target time as a portion of input data for prediction at the prediction target time is disclosed in JP-A-2011-024314.

A value of a target to be predicted often has a property indicating a specific response under effect of one or more parameters. For example, fluctuation of electric power demand is known to indicate a specific response mainly against a parameter of an outside air temperature, and thus most electric power demand is from air conditioning equipment and power consumption of the air conditioning equipment depends on indoor temperature of a building. However, due to a heat storage characteristic of a building frame, there is a time lag in a change of indoor temperature against a change of outdoor temperature. The time lag varies based on a structure of the building, such as a material of the building frame, the number and sizes of windows, and the number and sizes of entrances. A response of electric power demand against the parameter of the outside air temperature is a composite of such complex time lag responses described above.

When a target that responds with a time lag against a change in a parameter as described above is predicted, it is important to determine not only a correlation between the prediction target and the parameter, but also a process of a transitional change of the prediction target. However, it is difficult to precisely identify such complex time lag responses described above. Thus, in the related arts, approximate identification is performed.

A prediction method disclosed in JP-A-2011-024314 is the method of using the prediction result before the prediction target time having the correlation with the value of the prediction target time as the portion of the input data for prediction at the prediction target time. However, because a response accompanied by a time lag against a change in a parameter is a continuous process on time axis, it is preferable to handle past time-sequential information instead of information of only a past specific time section. It is difficult to obtain prediction data having high accuracy because such time-sequential information is not handled in the related arts.

### SUMMARY OF THE INVENTION

The present invention is accomplished in consideration of the above, and provides a data prediction system and the like for obtaining prediction data having high accuracy.

In order to solve such a problem, the present invention provides a factor separating unit configured to separate a factor constituting a transition of a value of a prediction target from the value, a factor predicting unit configured to calculate factor prediction data that is prediction data of each factor based on the factor separated by the factor separating unit and a parameter related to the prediction target, and a prediction calculating unit configured to calculate prediction data of the prediction target based on the factor prediction data calculated by the factor predicting unit.

Also, the present invention provides separating, by a factor separating unit, a factor constituting a transition of a value of a prediction target from the value, calculating, by a factor predicting unit, factor prediction data that is prediction data of each factor based on the factor separated by the factor separating unit and a parameter related to the prediction target, and calculating, by a prediction calculating unit, prediction data of the prediction target based on the factor prediction data calculated by the factor predicting unit .

According to such configurations, for example, since it is possible to determine a change of temporally continuous transition of a value of a prediction target by performing prediction for each factor constituting the transition of the value of the prediction target, errors of prediction data may be reduced as much as possible and prediction data having high accuracy may be provided.

According to the present invention, prediction data having high reliability may be calculated.

### BRIEF DESCRIPTION OF THE DRAWINGS

FIG. 1 is a diagram illustrating an example of a configuration of a data management system according to a first embodiment;
FIG. 2 is a diagram illustrating an example of a configuration of a data prediction system;
FIG. 3 is a diagram illustrating an example of a data flow of data prediction according to the first embodiment;
FIG. 4 is a diagram illustrating an example of a processing procedure related to the data prediction according to the first embodiment;
FIG. 5 is a conceptual diagram illustrating processes of inputting factor prediction data and outputting prediction data of a prediction target according to the first embodiment;
FIG. 6 is a diagram illustrating an example of a configuration related to a data management system according to a second embodiment;
FIG. 7 is a diagram illustrating an example of a configuration related to a data management system according to a third embodiment;
FIG. 8 is a diagram illustrating an example of a configuration related to a data management system according to a fourth embodiment; and
FIG. 9 is a conceptual diagram illustrating processes of inputting factor prediction data and outputting prediction data of a prediction target according to a fifth embodiment;

### DESCRIPTION OF EMBODIMENTS

Embodiments of the present invention will be described in detail with reference to drawings.

### (1) First Embodiment

### (1-1) Configuration related to data management system

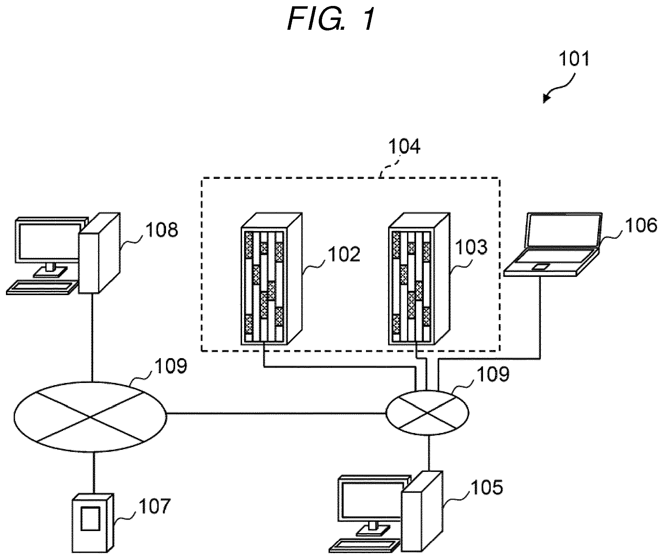

In FIG. 1, a reference numeral 101 denotes a data management system according to the current embodiment as a whole. For example, when applied to fields of electric power business, the data management system 101 predicts values of electric power demands and the like in a future predetermined period based on actual past electric power demands, and enables supply and demand management of electric power, such as establishing and executing an operation plan of a generator, and establishing and executing a procurement transaction plan of electric power of another electricity business operator based on a prediction result.

The data management system 101 includes a data prediction system 104 including a data prediction apparatus 102 and a data management apparatus 103, a plan preparation and execution management apparatus 105, an information input and output terminal 106, a data observation apparatus 107, and a data distribution apparatus 108. Also, a communication path 109 is a local area network (LAN), a wide area network (WAN) or the like, and is a communication path connecting various apparatuses and terminals constituting the data management system 101 to be able to communicate with each other.

The data prediction apparatus 102 calculates prediction data of a prediction target by using sample data or the like stored in the data management apparatus 103. The sample data includes prediction target sample data that is past observation data of a prediction target observed by the data observation apparatus 107 with a change of time, and parameter sample data that is past observation data of various parameters that are likely to affect an increase and decrease of a value of the prediction target observed by the data observation apparatus 107 with a change of time.

Here, the prediction target is, in fields of electric power business, for example, a consumption amount (demands) of energy, such as electric power, gas or water, a generation amount of energy, such as solar power generation or wind power generation, a transaction price of energy traded in wholesale exchange or the like. In fields other than the fields of electric power business, the prediction target is traffic measured by a communication base station or the like, a position information history of a mobile object such as a vehicle, the number of mobile objects such as taxies in operation per hour, or the like.

A parameter is a weather condition such as temperature, humidity, solar radiation quantity, wind speed or atmospheric pressure, a calendar day such as a date, a day of the week or a flag value indicating a type of an arbitrarily set date, an event indicating whether an unexpected event such as typhoon or an event occurs, the number of consumers of energy, a type of business thereof, the number of communication terminals connected to a communication base station, or the like.

The data management apparatus 103 stores the sample data. The data management apparatus 103 stores, for example, the sample data from a past date set in advance through the information input and output terminal 106 to a latest date. The data management apparatus 103 retrieves and transmits the sample data in response to a data obtaining request from another apparatus.

The plan preparation and execution management apparatus 105 performs preparation and execution of an operation plan of physical facilities for achieving a predetermined target based on prediction data output by the data prediction apparatus 102.

Here, the operation plan of the physical facilities is, in energy business fields, for example, an operation plan of a generator for satisfying predicted future demands or an energy demand plan value prepared based on the predicted future demands. In detail, the operation plan is an allocation plan of the number of generators to be activated and outputs of the generators, an allocation plan of a flow rate and pressure of a gas flowing to a gas conduit, or an allocation plan of a flow rate and pressure of water flowing to a water pipe. In communication business fields, for example, the operation plan is a control plan of the number of communication terminals connected to each communication base station, in which accommodation capacity of the communication base station is not exceeded. In transportation business fields, for example, the operation plan is an allocation plan of taxis for satisfying the number of predicted users.

The operation plan of facilities is not limited to direct execution by a subject using the plan preparation and execution management apparatus 105, but may be in a form of indirect execution. An operation of indirect facilities is, in the energy business fields, an operation of physical facilities by others based on a direct relative transaction contract, a transaction contract through exchange, or the like. In this case, an execution plan of the transaction contract corresponds to the operation plan of facilities.

The information input and output terminal 106 inputs data to the data prediction apparatus 102, the data management apparatus 103, and the plan preparation and execution management apparatus 105, and displays data stored therein or output therefrom.

The data observation apparatus 107 periodically measures prediction target sample data and parameter sample data at predetermined time intervals, and transmits the prediction target sample data and the parameter sample data to the data distribution apparatus 108 and/or the data management apparatus 103.

The data distribution apparatus 108 stores forecast data (forecast temperature or the like) of a parameter of a prediction target, and transmits the forecast data to the data management apparatus 103 and/or the data prediction apparatus 102.

Each of the data prediction apparatus 102, the data management apparatus 103, the plan preparation and execution apparatus 105, the information input and output terminal 106, the data observation apparatus 107, and the data distribution apparatus 108 may be realized by one computer or may be realized by a plurality of computers.

### (1-2) Configuration related to data prediction system

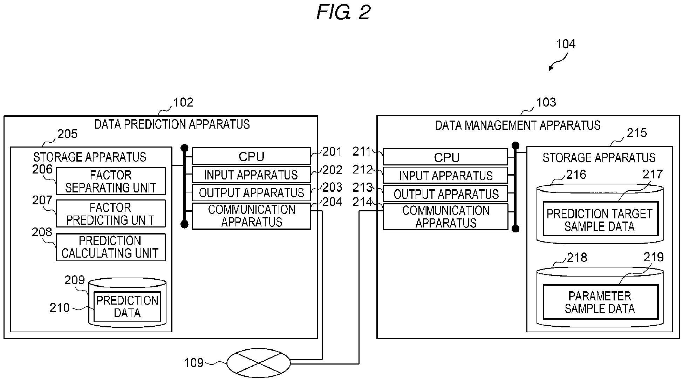

FIG. 2 is a diagram illustrating an example of a configuration of the data prediction system 104. The data prediction system 104 includes the data prediction apparatus 102 and the data management apparatus 103.

The data prediction apparatus 102 includes a central processing unit (CPU) 201 controlling operations of the data prediction apparatus 102 in overall, an input apparatus 202, an output apparatus 203, a communication apparatus 204, and a storage apparatus 205. The data prediction apparatus 102 is an information processing apparatus, such as a personal computer, a server computer, or a handheld computer.

The input apparatus 202 is a keyboard, a pointing device, or the like. The output apparatus 203 is a display, a printer, or the like. The output apparatus 203 may suitably output (display a result, transmit data, print, output a file, or the like) an output result or an intermediate result of each processing unit described below. The communication apparatus 204 includes a network interface card (NIC) connected to a wireless LAN or a wired LAN. The storage apparatus 205 is a storage unit such as a random access memory (RAM) or a read only memory (ROM).

Functions (processing units such as a factor separating unit 206, a factor predicting unit 207, a prediction calculating unit 208) of the data prediction apparatus 102 may be realized, for example, by CPU reading and executing a program stored in ROM on RAM (software), may be realized by hardware such as an exclusive circuit, or may be realized via a combination of software and hardware. Some of the functions of the data prediction apparatus 102 may be realized by another computer communicable with the data prediction apparatus 102.

The factor separating unit 206 separates a factor constituting a transition of a value of a prediction target from the sample data. The factor predicting unit 207 calculates factor prediction data that is prediction data of each factor in a period of the prediction target. The prediction calculating unit 208 calculates prediction data of the prediction target by combining each factor prediction data.

The factor constituting the transition of the value of the prediction target is, for example, a frequency component obtained by performing frequency analysis such as Fourier transform or wavelet transform on data of the transition of the value of the prediction target. For example, when the prediction target is electric power demand and a total value of a plurality of electric power consumers is to be predicted, the factor constituting the transition of the value of the prediction target is data for each category indicating a demand form such as for general households, for industries or for business. For example, when the prediction target is electric power demand and a total value of a plurality of electric power consumers is to be predicted, the factor constituting the transition of the value of the prediction target is data for each group indicating similar electric power demand.

The storage apparatus 205 stores a database such as a prediction data storage unit 209. The prediction data storage unit 209 stores prediction data 210 of the prediction target.

The data management apparatus 103 includes a CPU 211 controlling operations of the data management apparatus 103 in overall, an input apparatus 212, an output apparatus 213, a communication apparatus 214, and a storage apparatus 215. The data management apparatus 103 may be an information processing apparatus such as a personal computer, a server computer or a handheld computer.

The input apparatus 212 is a keyboard, a pointing device, or the like. The output apparatus 213 may be a display, a printer, or the like. The communication apparatus 214 may include NIC connected to wireless LAN or wired LAN. The storage apparatus 215 is a storage unit such as RAM or ROM.

The storage apparatus 215 stores databases such as a prediction target sample data storage unit 216 and a parameter sample data storage unit 218. Prediction target sample data 217 is retained in the prediction target sample data storage unit 216. Parameter sample data 219 is retained in the parameter sample data storage unit 218.

The prediction target sample data 217 is data indicating a past observation value of the prediction target observed with a change of time. For example, the prediction target sample data 217 is energy consumption data of electric power, gas, water, or the like, traffic data measured by a communication base station or the like, position information history data of a mobile object such as a vehicle, data on the number of mobile objects such as taxis in operation per hour, or the like. Such sample data is data in units of measuring devices or data indicating the total of a plurality of measuring devices.

The parameter sample data 219 is data indicating a past observation value observed with a change of time, in various parameters affecting an increase and decrease of the value of the prediction target. For example, the parameter sample data 219 is weather data such as temperature, humidity, solar radiation quantity, wind speed or atmospheric pressure, calendar data such as a date, a day of the week, or a flag value indicating a type of an arbitrarily set date, event data indicating whether an unexpected event such as typhoon or an event occurs, data on the number of consumers of energy, a type of business thereof, data on the number of communication terminals connected to a communication base station, or the like. The past observation data of the prediction target itself may be included as the parameter sample data 219.

Functions of the data management apparatus 103 may be realized, for example, by CPU reading and executing a program stored in ROM on RAM (software), may be realized by hardware such as an exclusive circuit, or may be realized via a combination of software and hardware. Some of the functions of the data management apparatus 103 may be realized by another computer communicable with the data management apparatus 103.

In the current embodiment, a configuration in which the data prediction apparatus 102 and the data management apparatus 103 are communicably connected to each other through the communication path 109 is described, but the configuration is not limited thereto, and the data prediction apparatus 102 and the data management apparatus 103 may be directly connected to each other or may exchange data via a recording medium (manned) such as a compact disc (CD) or a digital versatile disc (DVD).

In such a data prediction system 104, the factor separating unit 206 separates and outputs a factor (factor data) from the prediction target sample data 217. In detail, the factor separating unit 206 separates a plurality of factors constituting the transition of the value of the prediction target by using the prediction target sample data 217 and outputs the plurality of factors as factor data. The separated factor data includes a value of each separated factor and parameter data originally included in the prediction target sample data 217.

The factor predicting unit 207 calculates and outputs the factor prediction data of each factor based on the separated factor data and forecast data of a parameter in a prediction period. In detail, the factor predicting unit 207 identifies a model for calculating the factor prediction data against each factor of the separated factor data. Then, the factor predicting unit 207 calculates the factor prediction data of each separated factor in the period of the prediction target by inputting the forecast data to the identified model.

The prediction calculating unit 208 calculates and outputs the prediction data 210 based on the factor prediction data of each factor. In detail, the prediction calculating unit 208 calculates the prediction data 210 of the prediction target by combining the factor prediction data of each factor.

### (1-3) Processes related to data prediction system

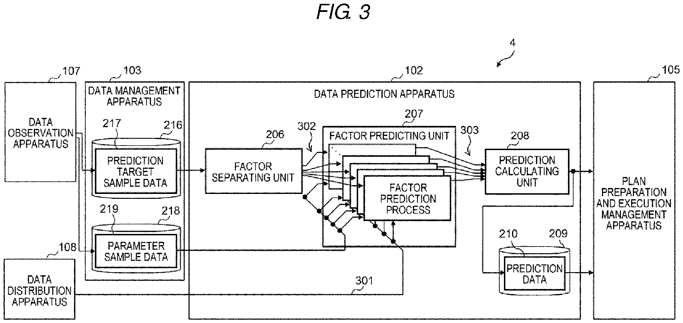

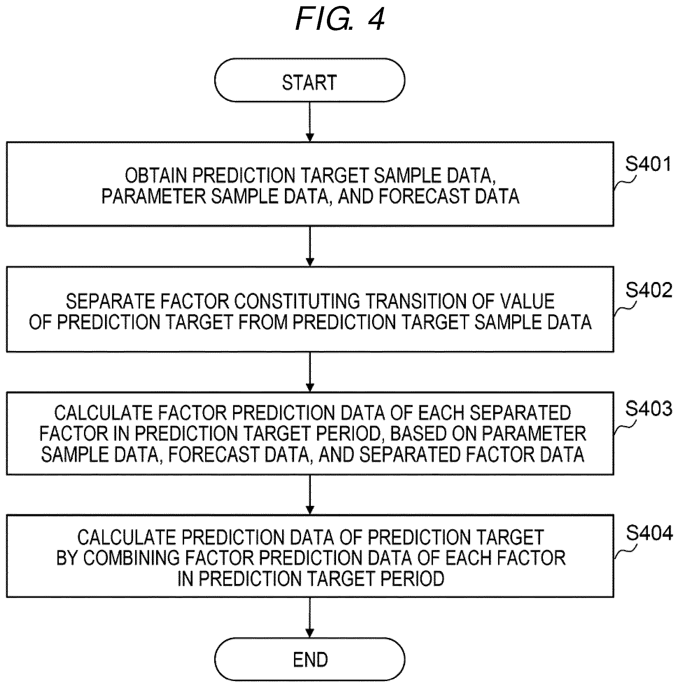

Processes (data prediction) related to the data prediction system 104 will be described with reference to FIGS. 3 and 4.

FIG. 3 is a diagram illustrating an example of a data flow of data prediction.

The data management apparatus 103 receives the prediction target sample data 217 from the data observation apparatus 107 and stores the prediction target sample data 217 in the prediction target sample data storage unit 216. The data management apparatus 103 receives the parameter sample data 219 from the data observation apparatus 107 and stores the parameter sample data 219 in the parameter sample data storage unit 218.

The data prediction apparatus 102 may obtain the prediction target sample data 217 stored in the data management apparatus 103. Then, in the data prediction apparatus 102, the factor separating unit 206 separates the factor constituting the transition of the value of the prediction target based on the prediction target sample data 217. Thereafter, the factor separating unit 206 outputs separated factor data 302 to the factor predicting unit 207.

In the data prediction apparatus 102, the factor predicting unit 207 performs factor prediction based on the parameter sample data 219, the factor data 302, and forecast data 301 indicating the forecast of a parameter (prediction data of a parameter group). In detail, the factor predicting unit 207 identifies a model for calculating factor prediction data 303 of each factor. The factor predicting unit 207 calculates the factor prediction data 303 of each factor by inputting the forecast data 301 against each identified model. The factor predicting unit 207 outputs the factor prediction data 303 to the prediction calculating unit 208.

In the data prediction apparatus 102, the prediction calculating unit 208 calculates the prediction data 210 of the prediction target by combining the factor prediction data 303 of each factor. Then, the prediction calculating unit 208 stores the calculated prediction data 210 in the prediction data storage unit 209.

The data prediction apparatus 102 transmits the calculated prediction data 210 to the plan preparation and execution management apparatus 105 directly or by reading the calculated prediction data 210 from the prediction data storage unit 209.

Next, a processing procedure related to the data prediction will be described by using FIG. 4. The data prediction includes processes triggered when the data prediction apparatus 102 receives an input operation of an apparatus user through the input apparatus 202 or when an execution time set in advance is reached through the information input and output terminal 106, and step S401 to S404 are performed by the data prediction apparatus 102.

In reality, the processes are performed based on various computer programs stored in the CPU 201 and the storage apparatus 205 of the data prediction apparatus 102. For convenience of description, it is described that a processing performer is the processing unit of the data prediction apparatus 102.

First, the data prediction apparatus 102 obtains the prediction target sample data 217 and the parameter sample data 219 from the data management apparatus 103, and obtains the forecast data 301 from the data distribution apparatus 108 (step S401). Here, timing of obtaining data is not specifically limited, and a plurality of processes may be performed collectively or may be performed for each process.

Next, the factor separating unit 206 separates the factor constituting the transition of the value of the prediction target based on the prediction target sample data 217 (step S402).

For example, the factor separating unit 206 divides the prediction target sample data 217 into sample groups of predetermined time intervals such as 24 hours (hereinafter, the divided sample groups of time intervals will be referred to as time-divided sample groups). The factor separating unit 206 separates a frequency component as the factor constituting the transition of the value of the prediction target by performing a frequency analysis on a sample of the prediction target included in each time-divided sample group. The factor separating unit 206 outputs the divided frequency component as the factor data 302 and ends operation.

A well-known method, such as Fourier transform or wavelet transform may be applied to a method of the frequency analysis.

Next, the factor predicting unit 207 calculates the factor prediction data 303 of each factor in the period of the prediction target based on the parameter sample data 219, the forecast data 301, and the factor data 302 (step S403).

In particular, the factor predicting unit 207 identifies the model for calculating the factor prediction data 303 of each factor of the factor data 302, and calculates the factor prediction data 303 of each factor in the period of the prediction target by inputting the forecast data 301 to the identified model.

For example, the factor predicting unit 207 extracts a data group of any one frequency A among frequency components included in the factor data 302. The extracted data group of the frequency A is a value of the frequency A of each time-divided sample group prepared by the factor separating unit 206 (for example, a frequency A component of the prediction target sample data 217 of each day of past n days).

Next, the factor predicting unit 207 extracts each of a data group of a parameter observed at the same date and time as an observation date and time of each time-divided sample group (for example, when a parameter is a temperature, data indicating an average temperature, a minimum temperature, a maximum temperature or the like for the past n days) from the parameter sample data 219, and identifies the model for calculating the factor prediction data 303 of the frequency A component in the period of the prediction target based on the data group of the frequency A and the extracted data group of the parameter.

For example, the factor predicting unit 207 derives a model (y = αx + β) for calculating the factor prediction data 303 by setting up simultaneous equations (y₁ = αx₁ + β, y₂ = αx₂ + β, and so on) in which factor prediction data (y) and forecast data (x) are unknown based on a separated data group (y₁, y₂, and so on) of frequency A and an extracted data group (x₁, x₂, and so on) of parameter, and solving the simultaneous equations (obtaining α and β).

The identification of the model is not limited to the above example, and a well-known method may be applied. The well-known method is, for example, a method using linearity, such as a linear regression model of a multiple regression model, and a generalized linear model of a logistic regression, a method using autoregression such as autoregressive with exogenous (ARX) model, a method using a reduction estimator such as Ridge regression, Lasso regression or ElasticNet, a method using a dimension degenerator such as a partial least-squares method or principal component regression, or a nonparametric method of a nonlinear model using polynomials, support vector regression, a regression tree, Gaussian process regression, a neural network, or the like.

Next, the factor predicting unit 207 calculates the factor prediction data 303 of the frequency A component in the period of the prediction target by inputting the forecast data 301 (the prediction data of the parameter group in the period of the prediction target) into the model.

Then, the factor predicting unit 207 calculates all other frequencies included in the factor data 302 similarly to the calculation of the frequency A.

Then, the factor predicting unit 207 outputs the factor prediction data 303 of each factor to the prediction calculating unit 208 and ends operation.

Next, the prediction calculating unit 208 calculates the prediction data 210 of the prediction target by combining the factor prediction data 303 of each factor in the period of the prediction target (step S404).

For example, the prediction calculating unit 208 calculates the prediction data 210 of the transition of the value of the prediction target by performing an inverse transformation of the frequency analysis performed by the factor separating unit 206 on the factor prediction data 303 of each frequency component included in the factor prediction data 303 of each factor. The prediction calculating unit 208, for example, outputs the calculated prediction data 210 and ends operation. In other words, the data prediction apparatus 102 may store the prediction data 210 of the prediction target calculated by the prediction calculating unit 208 in the prediction data storage unit 209 or transmit the prediction data 210 to the plan preparation and execution management apparatus 105.

Via the above process, the data prediction ends.

Here, the plan preparation and execution management apparatus 105 receives the prediction data 210 from the data prediction apparatus 102, calculates an operation plan of physical facilities, and executes the operation plan via a control apparatus of each facility. For example, when applied to fields of electric power business, the plan preparation and execution management apparatus 105 prepares an operation plan of a generator that satisfies the prediction data 210 in the data prediction apparatus 102, and operates the generator via a control apparatus of the generator. Also, the plan preparation and execution management apparatus 105 prepares an order message for an electric power exchange, and transmits the order message to the exchange.

Via the above process, all processes according to the current embodiment are ended.

### (1-4) Explanation of effects of current embodiment

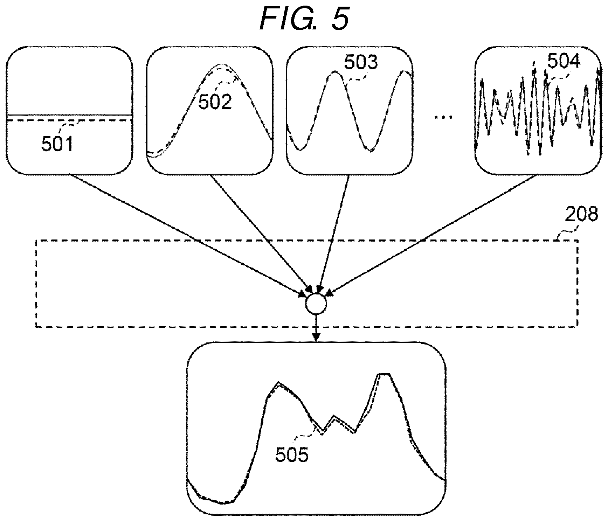

Effects of the current embodiment will be described by using FIG. 5.

FIG. 5 is a conceptual diagram illustrating processes of inputting factor prediction data 501 to 504 (data indicated in broken lines) output by the factor predicting unit 207 to the prediction calculating unit 208, and outputting prediction data 505 (data indicated by broken lines) of a prediction target.

In FIG. 5, factor prediction data of four types of frequency components are illustrated herein as the factor prediction data 501 to 504 output by the factor predicting unit 207. Time widths in horizontal axes in the factor prediction data 501 to 504 are the same. The factor prediction data 501 illustrates a result of a first frequency component (direct current component), the factor prediction data 502 illustrates a result of a second frequency component, the factor prediction data 503 illustrates a result of a third frequency component, and the factor prediction data 504 illustrates a result of a fourth frequency component (frequency component of shortest period).

For convenience of description, FIG. 5 illustrates the factor prediction data 501 to 504 of the frequency components output by the factor predicting unit 207 each in broken lines, and simultaneously, observation data of each frequency component originally observed afterward in solid lines. For convenience of description, the frequency components are four types of the factor prediction data 501 to 504, but in actual operation, the number of types of frequency components is not limited to four.

Here, observing the factor prediction data 501 to 504, prediction results of the factor prediction data 501 of the direct current component and the factor prediction data 502 of the second frequency component may have a slight error in amplitude compared to observation values (data in solid lines) observed afterward. However, observing the factor prediction data 503 and the factor prediction data 504, prediction results match in both periods and amplitude compared to observation values of each frequency observed afterward. Accordingly, the prediction data 505 (data in broken lines) indicating a transition of the value of the prediction target may have a slight bias error in an intermediate time zone compared to an actual transition (data in solid lines) of the value of the prediction target observed afterward, but may follow a detailed transition per time.

By predicting each frequency component that is the factor constituting the transition of the value of the prediction target as such, it is possible to follow various transitional changes from a long period of time to a short period of time, and thus accuracy of prediction may be improved.

The current embodiment is characterized in, for example, including the factor separating unit 206 separating a factor (for example, the factor data 302) constituting a transition of a value from a value of a prediction target (for example, the prediction target sample data 217), the factor predicting unit 207 calculating factor prediction data (for example, the factor prediction data 303) that is prediction data of each factor based on the factor separated by the factor separating unit 206 and parameters related to the prediction target (for example, the parameter sample data 219 and the forecast data 301), and the prediction calculating unit 208 calculating prediction data (for example, the prediction data 210) of the prediction target based on the factor prediction data calculated by the factor predicting unit 207.

According to such a characteristic configuration, for example, by performing prediction per factor constituting a transition of a value of a prediction target, a change in a temporally continuous transition of the value of the prediction target may be determined, and thus an error of the prediction data may be reduced as much as possible and prediction data having high accuracy may be provided.

### (2) Second Embodiment

In the first embodiment, a target from which a factor constituting a transition of a value is separated is described only for a prediction target, but the invention is not limited thereto, and the target may be applied to parameter sample data.

For example, when a prediction target is electric power demand, parameter sample data may be weather data such as a temperature, humidity, a solar radiation quantity or atmospheric pressure. However, a response of the electric power demand against a change in weather has a time lag due to a physical process such as frame heat storage of a building. Thus, by separating a factor constituting a transition of a value of weather and modeling a response relationship with each factor constituting a time change of electric power demand of a prediction target, it is possible to precisely identify a model and improve accuracy of prediction.

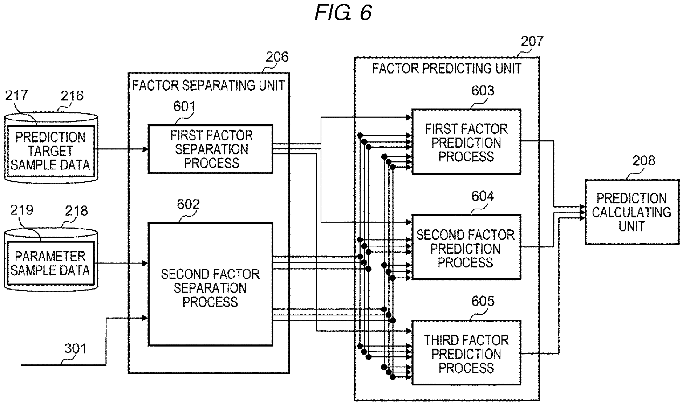

More specifically, this will be described by using FIG. 6. In the current embodiment, for convenience of description, a factor constituting a transition of a value of a prediction target is divided into three types (frequency A component, frequency B component, and frequency C component).

As illustrated in FIG. 6, the factor separating unit 206 executes double factor separation (a first factor separation 601 and a second factor separation 602). In the first factor separation601, the factor separating unit 206 separates a factor constituting a transition of a value of a prediction target. Since such separation is the same as that of the first embodiment, descriptions thereof are omitted.

In the second factor separation 602, the factor separating unit 206 separates a factor constituting a transition of a value of a parameter. In particular, the factor separating unit 206 outputs the factor constituting the transition of the value of the parameter with the parameter sample data 219 as an input. The output factor constituting the value of the parameter is input to the factor predicting unit 207 as new parameter sample data. In the calculation of the factor predicting unit 207, since formats of sample data and the forecast data 301 need to be the same, the forecast data 301 is also similarly separated to a factor constituting a transition of a value of forecast in the second factor separation 602.

Regarding methods of separating a factor in the first factor separation 601 and the second factor separation 602, the same method may be applied or different methods may be applied.

The factor predicting unit 207 calculates factor prediction data of each factor based on a data group of frequency of the factor constituting the transition of the value of the prediction target separated by the factor separating unit 206 and a data group of frequency of the factor constituting the transition of the value of the parameter. In detail, the factor predicting unit 207 calculates the factor prediction data of each of three types of factors by performing first factor prediction 603, second factor prediction 604, and third factor prediction 605.

For example, the factor predicting unit 207 derives a model (y = αx₁ + βx₂ + γx₃) for calculating the factor prediction data by setting up simultaneous equations (y₁ = αx₁₁ + βx₁₂ + γx₁₃, y₂ = αx₂₁ + βx₂₂ + γx₂₃, y₃ = αx₃₁ + βx₃₂ + γx₃₃) in which factor prediction data (y) and forecast data (x) are unknown based on a data group (y₁, y₂, y₃) of frequency A of the factor constituting the transition of the value of the prediction target separated by the factor separating unit 206 and a data group (x₁₁, x₁₂, x₁₃, x₂₁, x₂₂, x₂₃, x₃₁, x₃₂, x₃₃) of frequency of the factor constituting the transition of the value of the parameter separated by the factor separating unit 206, and solving the simultaneous equations (get α, β, and γ). Here, x₁, x₂, and x₃ are values obtained by performing frequency analysis on forecast data.

Identification of the model is not limited to the above example, and a well-known method may be applied thereto. Regarding the well-known method, a method described in the first embodiment or the like may be suitably employed.

Next, the factor predicting unit 207 calculates factor prediction data of a frequency A component in a period of the prediction target by inputting a value obtained by frequency analysis on the forecast data 301 that is prediction data of a parameter group in the period of the prediction target to the model.

Then, the factor predicting unit 207 performs the calculation for all other frequency components (a frequency B component and a frequency C component in the current example) included in factor data similarly to the calculation of the frequency A component.

Then, the factor predicting unit 207 outputs prediction results of all factors together as the factor prediction data of each factor, and ends an operation.

The current embodiment is characterized in that, for example, the factor separating unit 206 separates the factor constituting the transition of the value of the parameter (for example, the data group of frequency of the factor constituting the transition of the value of the parameter), and the factor predicting unit 207 calculates the factor prediction data that is the prediction data of each factor constituting the transition of the value based on the factor constituting the transition of the value separated by the factor separating unit 206 and the factor constituting the transition of the value of the parameter separated by the factor separating unit 206.

According to such a characteristic configuration, for example, by separating the factor constituting the transition of the parameter and modeling a response relationship with each factor constituting the transition of the value of the prediction target, it is possible to precisely identify the model and accurately calculate the prediction data of the prediction target.

### (3) Third Embodiment

In the above embodiment, a frequency component is described as an example of the factor constituting the transition of the value of the prediction target, but the invention is not limited thereto, and another factor constituting the transition of the value of the prediction target may be separated.

For example, when the prediction target is electric power demand and a total value (total measurement data) of measurement data by a plurality of measuring devices is to be predicted, the measurement data of each measuring device may be separated as the factor constituting the transition of the value of the prediction target.

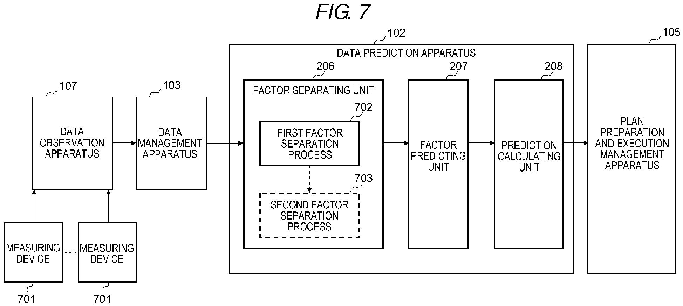

More specifically, this will be described by using FIG. 7. In FIG. 7, a main configuration of the data management system 101 according to the current embodiment is illustrated.

Electric power demand measured by each of a plurality of measuring devices 701 is electric power demand of a plurality of types of demand categories, such as general household electric power, commercial electric power, and industrial electric power. Here, the factor separating unit 206 separates (an example of a first factor separation 702) measurement data per demand category (an example of a group in which transitions of measurement data are similar). The factor separating unit 206 may input separated data of each demand category to the factor predicting unit 207 or may further perform a second factor separation 703 (an operation of separating a factor via a frequency analysis described in the above embodiment) on the separated data of each demand category to input a result thereof to the factor predicting unit 207.

When the total value of the measurement data by the plurality of measuring devices 701 is a prediction target, the factor separating unit 206 may separate a factor based on the similarity of transitions of the values of the measurement data of each measuring device 701 (an example of the first factor separation 702) . In particular, the factor separating unit 206 performs clustering based on the similarity of a time change of the measurement data of each measuring device 701 in a predetermined period, and separates the measurement data of each measuring device 701 as a plurality of clusters (an example of the group in which the transitions of measurement data are similar).

A well-known method may be applied as clustering. The well-known method is clustering as a neighborhood optimal method such as k-means, expectation-maximization (EM) algorithm or spectral clustering, or clustering as identification boundary optimum such as unsupervised support vector machine (SVM), vector quantization (VQ) algorithm or self-organizing maps (SOM).

The current embodiment is characterized in that, for example, the value of the prediction target is the total measurement data in which the measurement data measured by each of the plurality of measuring devices 701 is added, and the factor separating unit 206 separates, as a factor, the measurement data of the group having similar transition from the total measurement data (for example, separates the measurement data for each demand category, separates the measurement data for each cluster, or the like).

According to such a characteristic configuration, for example, since the measurement data by the plurality of measuring devices 701 are separated by the demand classification or clusters, the measurement data after separation becomes a group of data, in which response characteristics of the value of the prediction target against a parameter are similar. Accordingly, it is possible to individually identify each suitable model and thus the accuracy of prediction is improved. Since the separated data has similar response characteristics against each parameter, by further separating a factor such as a frequency component, it is possible to further precisely identify a model, and thus the accuracy of prediction is improved.

A feature amount for performing clustering may be the value of the time change of the measurement data of each measuring device 701 itself or may be the frequency component constituting the value of the time change of the measurement data of each measuring device 701. By clustering the measurement data of the plurality of measuring devices 701 with the respective frequency components, it becomes possible to separate a clearer factor in a subsequent calculation of separating a factor, thereby improving the accuracy of prediction.

### (4) Fourth Embodiment

In the above embodiment, it is described that the factor prediction unit 207 performs factor prediction of each factor only once, but the invention is not limited thereto, and a recursive calculation may be performed by using factor prediction data as new parameter sample data.

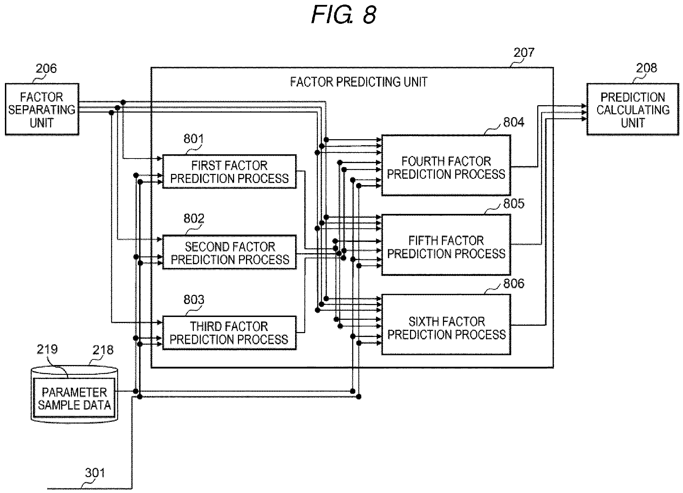

More particularly, this will be described by using FIG. 8. Herein, for convenience of description, it is described that a factor constituting a transition of a value of a prediction target is separated into three types. The factor predicting unit 207 receives the three types of factor data from the factor separating unit 206. Then, the factor predicting unit 207 calculates factor prediction data of each of the three types of factors by first factor prediction 801, second factor prediction 802, and third factor prediction 803.

Here, in the current embodiment, the factor predicting unit 207 sets the factor prediction data of each of the factors as new parameter sample data and inputs the parameter sample data to fourth factor prediction 804, fifth factor prediction 805, and sixth factor prediction 806. For example, in the fourth factor prediction 804, in addition to the parameter sample data 219 of the related arts, the factor predicting unit 207 sets prediction target sample data of each factor that was the prediction target in the second factor prediction 802 and the third factor prediction 803 as new parameter sample data, and identifies a model.

The factor predicting unit 207 calculates and outputs new factor prediction data by inputting, to the identified model, the factor prediction data of each factor calculated in the second factor prediction 802 and the third factor prediction 803 in addition to the forecast data 301. The factor predicting unit 207 calculates and outputs new factor prediction data of each of the three factors by performing the same operation in the fifth factor prediction 805 and the sixth factor prediction 806, and inputs the new factor prediction data to the prediction calculating unit 208.

Here, when a correlation exists between the factors separated by the factor separating unit 206, the accuracy of prediction data of the transition of the value of the prediction target output by the prediction calculating unit 208 is improved by identifying a model considering even the correlation between the factors, but to calculate the factor prediction data of the factor from the identified model, factor prediction data of another factor is required.

Accordingly, the current embodiment is characterized in that, for example, the factor predicting unit 207 calculates the factor prediction data that is the prediction data of each factor based on the factor separated by the factor separating unit 206, the parameter related to the prediction target, and a new parameter, by using the calculated factor prediction data as the new parameter.

According to such a characteristic configuration, for example, prediction even considering the correlation between factors is possible, and thus the accuracy of prediction is improved.

In the current embodiment, the number of recursive calculation is described to be once for convenience, but the number may be twice or more. When the number of recursive calculation is optimized, a method of setting the number in which an index indicating the suitability of a model identified regarding sample data is the optimum, a method of setting the number in which a prediction error of the factor prediction data output by the factor predicting unit 207 is the minimum, a method of setting the number in which a prediction error of the prediction data output by the prediction calculating unit 208 is the minimum, or the like may be employed.

### (5) Fifth Embodiment

In the above embodiment, it is described that the prediction data of the transition of the value of the prediction target output by the prediction calculating unit 208 is one, but the invention is not limited thereto, and the prediction calculating unit 208 may output a plurality of pieces of prediction data of the transition of the value of the prediction target.

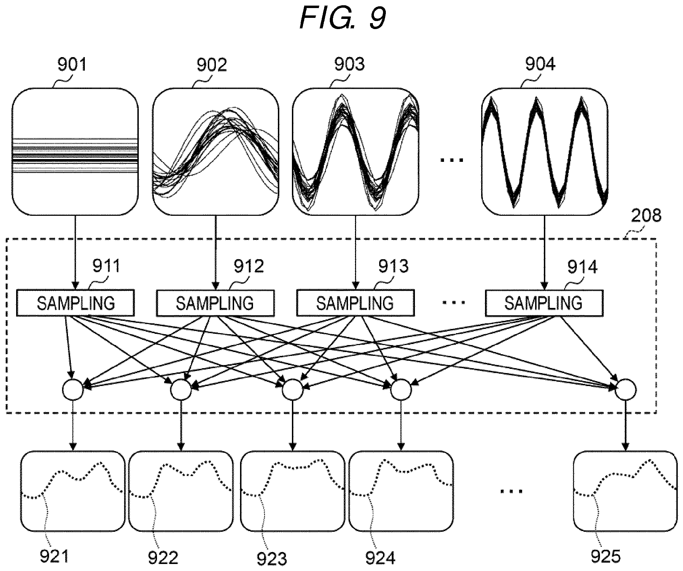

More specifically, this will be described by using FIG. 9. FIG. 9 is a conceptual diagram illustrating calculation of inputting factor prediction data 901 to 904 (a data group indicated at a top portion in the drawing) output by the factor predicting unit 207 to the prediction calculating unit 208 and outputting factor prediction data 921 to 925 (a data group indicated at a bottom portion of the drawing) of a prediction target.

Here, factor prediction data of four types of frequency components is illustrated as the factor prediction data 901 to 904 output by the factor predicting unit 207. Time widths that are horizontal axes in the factor prediction data 901 to 904 are the same. The factor prediction data 901 illustrates a result of a direct current component, the factor prediction data 902 illustrates a result of a second frequency component, the factor prediction data 903 illustrates a result of a third frequency component, and the factor prediction data 904 illustrates a result of a frequency component of shortest period.

Here, a plurality of result values exist in the factor prediction data 901 to 904 of each frequency component. The result values are calculated according to observation noise of a model for calculating the factor prediction data 901 to 904 of each frequency component or identification results of system noise of the model itself, or calculated according to identified probability distribution when the model is identified as a probability model.

In the current embodiment, the prediction calculating unit 208 includes sampling units 911 through 914 each obtaining one piece of factor prediction data respectively from the plurality of pieces of factor prediction data 901 to 904 of respective frequency components. For example, the sampling units 911 through 914 obtain one piece of factor prediction data from the factor prediction data 901 to 904 respectively, and the prediction calculating unit 208 calculates the prediction data 921 to 925 of the transition of the value of the prediction target from the obtained factor prediction data. The number of pieces of prediction data 921 to 925 is not specifically limited, and for example, a predetermined number is set in advance through the information input and output terminal 106.

The current embodiment is characterized in that, for example, the factor predicting unit 207 calculates a plurality of pieces of factor prediction data for each factor, and the prediction calculating unit 208 samples one piece of factor prediction data for each factor from the plurality of pieces of factor prediction data calculated by the factor predicting unit 207 and calculates prediction data of a prediction target based on the sampled factor prediction data to calculate a plurality of pieces of prediction data.

According to such a characteristic configuration, for example, a plurality of pieces of possible prediction data may be output.

### (6) Other Embodiments

In the above embodiment, it is described that the present invention is applied to the data management system 101, but the present invention is not limited thereto and may be widely applied to other various systems, methods, and apparatuses.

In the above embodiment, it is described that parameter sample data and forecast data are separately provided, but the present invention is not limited thereto, and one may be included in another.

In the above embodiment, for convenience of description, various types of data are described by using an XX table, but a data structure is not limited and may be expressed as XX information or the like.

Information such as a program, a table or a file realizing each function in the above description may be stored in a storage apparatus, such as a memory, a hard disk, or a solid state drive (SSD), or in a recording medium, such as an IC card, an SD card, or DVD.

The above configuration may be modified, rearranged, combined, or omitted as appropriate without departing from the spirit of the present invention.

## Claims

1. A data prediction system comprising:
a factor separating unit configured to separate a factor constituting a transition of a value of a prediction target from the value;
a factor predicting unit configured to calculate factor prediction data that is prediction data of each factor based on the factor separated by the factor separating unit and a parameter related to the prediction target; and
a prediction calculating unit configured to calculate prediction data of the prediction target based on the factor prediction data calculated by the factor predicting unit.

2. The data prediction system according to claim 1, wherein
the factor separating unit performs a frequency analysis on the value and separates a frequency component obtained via the frequency analysis as a factor.

3. The data prediction system according to claim 1, wherein
the value is total measurement data in which measurement data measured by each of a plurality of measuring device is added, and
the factor separating unit separates measurement data for groups having similar transition as a factor from the total measurement data.

4. The data prediction system according to claim 1, wherein
the factor separating unit separates a factor constituting a transition of a value of the parameter, and
the factor predicting unit calculates the factor prediction data that is prediction data of each factor constituting the transition of the value based on the factor constituting the transition of the value separated by the factor separating unit and the factor constituting the transition of the value of the parameter separated by the factor separating unit.

5. The data prediction system according to claim 1, wherein
the factor predicting unit calculates the factor prediction data that is the prediction data of each factor based on the factor separated by the factor separating unit, the parameter related to the prediction target, and a new parameter, in which the new parameter is the calculated factor prediction data.

6. The data prediction system according to claim 1, wherein
the factor predicting unit calculates a plurality of pieces of factor prediction data for each factor, and
the prediction calculating unit samples one piece of factor prediction data for each factor from the plurality of pieces of factor prediction data calculated by the factor predicting unit, and calculates prediction data of the prediction target based on the sampled factor prediction data to calculate a plurality of pieces of prediction data.

7. A data prediction method comprising:
separating, by a factor separating unit, a factor constituting a transition of a value of a prediction target from the value;
calculating, by a factor predicting unit, factor prediction data that is prediction data of each factor based on the factor separated by the factor separating unit and a parameter related to the prediction target; and
calculating, by a prediction calculating unit, prediction data of the prediction target based on the factor prediction data calculated by the factor predicting unit.

8. A data prediction apparatus comprising:
a factor separating unit configured to separate a factor constituting a transition of a value of a prediction target from the value;
a factor predicting unit configured to calculate factor prediction data that is prediction data of each factor based on the factor separated by the factor separating unit and a parameter related to the prediction target; and
a prediction calculating unit configured to calculate prediction data of the prediction target based on the factor prediction data calculated by the factor predicting unit.

## Amended claims

### Amended claims in accordance with Rule 137(2) EPC.

1. A data prediction system (101) comprising:
a factor separating unit (206) configured to separate a factor constituting a transition of a value of a prediction target from the value, the prediction target being one of: a consumption amount of energy and a generation amount of energy;
a factor predicting unit (207) configured to calculate factor prediction data that is prediction data of each factor based on the factor separated by the factor separating unit and a parameter related to the prediction target;
a prediction calculating unit (208) configured to calculate prediction data of the prediction target based on the factor prediction data calculated by the factor predicting unit; and
a plan operation and execution management apparatus (105) configured to prepare an operation plan of a generator that satisfies the prediction data, and operates the generator via a control apparatus of the generator.

2. The data prediction system according to claim 1, wherein
the factor separating unit performs a frequency analysis on the value and separates a frequency component obtained via the frequency analysis as a factor.

3. The data prediction system according to claim 1, wherein
the value is total measurement data in which measurement data measured by each of a plurality of measuring device is added, and
the factor separating unit separates measurement data for groups having similar transition as a factor from the total measurement data.

4. The data prediction system according to claim 1, wherein
the factor separating unit separates a factor constituting a transition of a value of the parameter, and
the factor predicting unit calculates the factor prediction data that is prediction data of each factor constituting the transition of the value based on the factor constituting the transition of the value separated by the factor separating unit and the factor constituting the transition of the value of the parameter separated by the factor separating unit.

5. The data prediction system according to claim 1, wherein
the factor predicting unit calculates the factor prediction data that is the prediction data of each factor based on the factor separated by the factor separating unit, the parameter related to the prediction target, and a new parameter, in which the new parameter is the calculated factor prediction data.

6. The data prediction system according to claim 1, wherein
the factor predicting unit calculates a plurality of pieces of factor prediction data for each factor, and
the prediction calculating unit samples one piece of factor prediction data for each factor from the plurality of pieces of factor prediction data calculated by the factor predicting unit, and calculates prediction data of the prediction target based on the sampled factor prediction data to calculate a plurality of pieces of prediction data.

7. A data prediction method comprising:
separating, by a factor separating unit (206), a factor constituting a transition of a value of a prediction target from the value, the prediction target being one of: a consumption amount of energy and a generation amount of energy;
calculating, by a factor predicting unit (207), factor prediction data that is prediction data of each factor based on the factor separated by the factor separating unit and a parameter related to the prediction target;
calculating, by a prediction calculating unit (208), prediction data of the prediction target based on the factor prediction data calculated by the factor predicting unit;
preparing, by a plan operation and execution management apparatus (105), an operation plan of a generator that satisfies the prediction data, and operates the generator via a control apparatus of the generator.
